# EUROPEAN PATENT APPLICATION

(11) **EP 1 739 951 A1**
(43) Date of publication of application: **03.01.2007**
(21) Application number: 05106014.3
(22) Date of filing: 01.07.2005
(51) Int. Cl.: H04N 1/32

(54) **Individual rendering of logos to track document leakage**

(71) Applicant: Fraunhofer-Gesellschaft Zur Förderung der angewand ten Forschung e.v., 80686 München (DE)
(72) Inventor: Steinebach, Martin, 64859 Eppertshausen (DE); Croce-Ferri, Lucilla, 64342 Seeheim-Jugenheim (DE)
(74) Representative: Hilleringmann, Jochen

(57) **Abstract**

The computer-implemented method for tracking the distribution of company documents carrying a graphical information added to the documents e.g. a company logo or a confidential indication comprises the steps of generating modifications of the original of the graphical information, associating each graphical information modification to a different one of a plurality of potential distribution channels for the company documents, inserting the modified graphical information in a document whose distribution has to be monitored, by rendering the graphical information in accordance with its respective modification upon generating the document by a source which is part of the respective distribution channel, comparing the graphical information of a distributed document or copy thereof with the modified versions of the graphical information for detecting the source of the distribution channel used for distributing the distributed document.

## Description

### BACKGROUND

### Field of the Invention

The present invention is related to the field of document security with enhanced means to reconstruct the origin of the different distribution ways of documents inside or outside the company owning them.

The proposed approach addresses the track of document leakage, which comports the loss of confidentiality for important company documents in their digital and printed form. This can be provoked inside or outside a company, e.g. by malicious or accidental redistribution, by hackers or employee theft, producing enormous financial damages to the company.

For example, a fashion design company is producing some documents, containing the new collection for the next season. Different designers are involved in the final processing of the new collection. This has to be presented as premiere to an important social event. E.g. a fashion magazine bought the rights to publish the collection a day before the social event Till this day, these documents must be kept secret. But also other fashion magazines are interested in the documents and a company employee, one of the designers, makes an illegal agreement with one of these. He manages in faxing parts of the documents to one of the other magazines, which publishes them before the magazine which had paid for the publication. This might cause unpleasant legal and financial consequences for the fashion design company with which the contract was made.

### State of the Art

In order to address the problem of track document leakage, different strategies are adopted, depending mainly on the type of documents that have to be protected, on the security level required, and also on the distributions way of the documents.

For very important documents requiring very high security levels, such as identity documents, *paper security features,* both visible and invisible ones, are used, in order to prevent the unauthorized duplication of a printed document [2]. Also *special printing processes,* such as hot stamp foil printing, prismatic printing, or intaglio printing, are used to add security to the documents [1].

Another way to prevent the unauthorized copying is to provide documents with anti-copy, optical watermarks [5], which appear as stamps on the copied document Using special papers, hidden words appear when the documents are copied or scanned ([3], [6]). Protecting the *network printers and copiers* is a complementary possibility ([7], [8]). Printers and copiers can be provided with special drivers, printing visible watermarks on the documents and tracking job-level accounting for print queues [4].

Another very sophisticated way to protect documents is by using *Radio Frequency Identification (RFID) technologies.* Adopting RFID tags embedded in documents, it is possible to have a system that offers real-time document tracking. Nowadays it is feasible to secure printed documents with chipless RFID tags, where small chemical particles or aluminum fibers can be embedded into or printed onto the paper. A reader is available to read information coming from such tags. In this way, document leakage can be restricted by preventing unauthorized copies of the documents inside a company providing the reader information to the photocopiers or checking all exit points with readers ([1]).

For some applications it is important to protect not only the printed version of documents but also their digital copy. Digital Right Management (DRM) Systems combine document protection and control and provide different solutions to address the problem of tracking document leakage. Digital rights are defined to access and process documents, depending on their content and security levels ([9], [11], [12],[13],[14], just to mention some examples). Documents can be encrypted and passwords, digital signatures and even document creator's thumbprints are used to protect the documents [10]. Once documents have been decrypted and printed, then other types of security approaches are needed, in order to track illegal document distribution.

Digital fingerprinting watermarking is a technology suitable for this purpose. It involves embedding information into multimedia data in an invisible or inaudible way. The information embedded is personalized and depends on the distribution way the document is subject. This technology is already used for example in online music shops, where clients can order their own copy of a song. Before delivery, the audio data is marked with a fingerprint of the client. This mark survives different manipulations, such as a digital-to-analog conversion and other common types of post processing operations. In this way the illegal distribution of the data can be tracked, by detecting the fingerprint embedded into the illegal distributed copy ([16], [17]).

### Open Issues with Current Solutions

The solutions presented in the state-of-the-art section to avoid and/or track document leakage present various drawbacks. The most important one is that they are often very laborious and complex and apply only to very specific situations. That implies that it is rather difficult to integrate them in other security mechanisms, already adopted by the company, which means a lack of compatibility. Furthermore, not always the distribution of printed documents can be monitored by the security framework. In any case, the proposed solutions require high maintenance costs for software and hardware and are justified only for scenarios with very high security levels. But, even if this is not always the case for all documents of a company, nevertheless it is important to avoid or minimize the leakage of documents.

### SUMMARY OF THE INVENTION

The invention provides a computer-implemented method for tracking the distribution of company documents carrying a graphical information added to the documents e.g, a company logo or a confidential indication, comprising the steps of
- generating modifications of the original of the graphical information,
- associating each graphical information modification to a different one of a plurality of potential distribution channels for the company documents,
- inserting the modified graphical information in a document whose distribution has to be monitored, by rendering the graphical information in accordance with its respective modification upon generating the document by a source which is part of the respective distribution channel,
- comparing the graphical information of a distributed document or copy thereof with the modified versions of the graphical information for detecting the source of the distribution channel used for distributing the distributed document.

If the document involved is a printed document, digitalization of the document to be tracked is provided.

The proposed solution requires the individual rendering of an graphical information in a document of a company that appears in the digital and printed version of all the documents to be observed. This graphical information which is added to the content of the document can be the company logo or a confidential indication. In the following, the invention will be explained for the graphical information being a company logo.

In order to identify the possible sources of the document leakage, the versions of the logo differ slightly for different distribution ways.

The logo could be provided as a 2D graphics in a vector format and the individual rendering could be performed by slightly changing the outlines of the logo in an automatic way or by changing some rendering effects. The visual quality of the logo should not be affected by this operation and it should not be possible to recognize easily that the various versions of the logo differ from each others.

### Brief Description of the Drawings

The invention will be described in more detail herein below with regard to a specific embodiment shown in the drawing wherein
- Fig. 1: represents an example of the original of a company logo,
- Fig. 2: represents a part of the logo on a larger scale within which modifications of the logo shall be implemented,
- Fig. 3: represents a first modification of the logo in its modified part,
- Fig. 4: represents the modified logo of Fig. 3 but on the scale as in Fig. 1,
- Fig. 5: represents a second modification of the logo in its modified part,
- Fig. 6: represents the modified logo of Fig. 4 but on the scale as in Fig. 1.

### Description of an Embodiment of the Invention

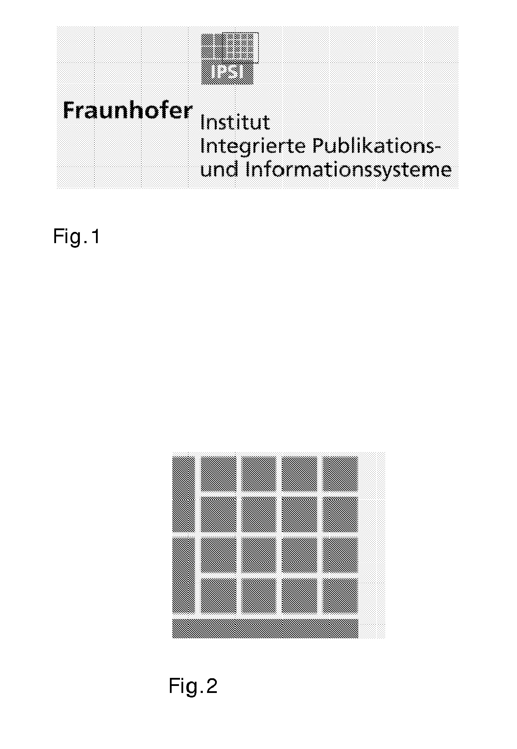

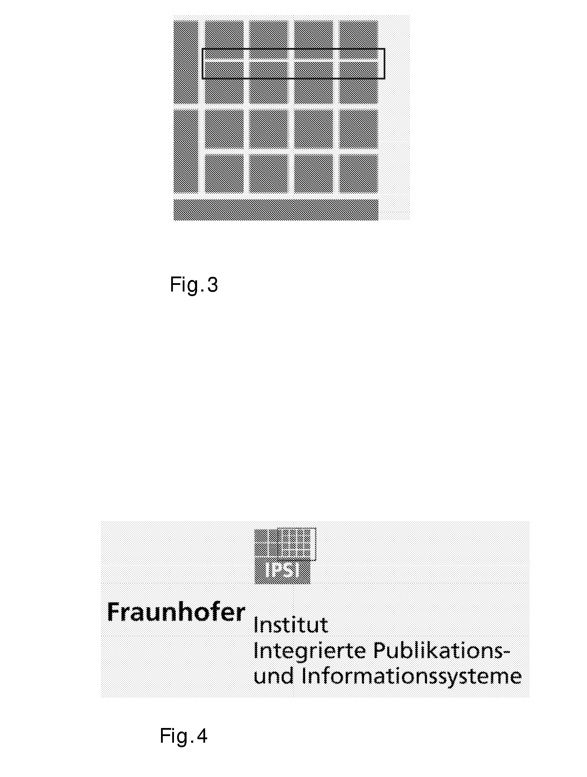

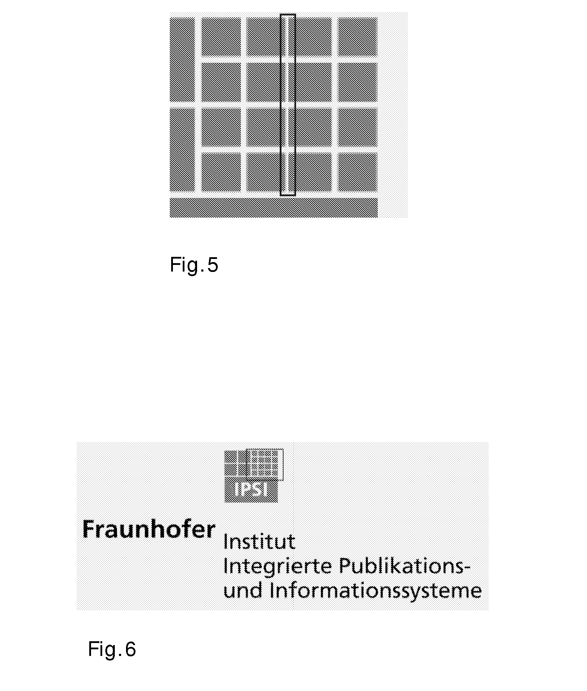

Figs. 1 to 4 show a simplified example of this concept. In Fig. 1 the original version of a logo and in Fig. 2 an enlarged part of it are shown. Figs. 3 and 5 show two versions of the modified enlarged parts of the logo. Some squares have been changed into rectangles by reducing the space between two rows of them. The modifications depend on the origin of the distribution way, the document with the logo has to follow. In the first case (Fig. 3), for example, the document is produced for an employee inside the company; in the case of Fig 5, for a client outside the company. A database will store these relationships "modification-distribution way" for the verification process.

The visual quality of the modified logos in the size normally used for documents is not affected by these modifications and no apparent differences between logos following different distribution ways can be detected simply by visual check, as Figs. 4 and 6 show. In the size reduced version of the logo, suitable to be inserted as header into a document, the two different modifications of the size of the squares cannot be identified. The example presented in the figures is just a simplification of the concept and maybe not suitable for real applications

In fact the individual rendering of a logo has to satisfy some requirements, in order to be suitable for tracking document leakage. In particular it has to be robust against print&scan and faxing processing and the detection of the individual rendering has to uniquely identify the source (the distribution way) of this particular copy of the document. Furthermore the possible instantiations of the individual rendering should be enough to cover all the possible sources of distribution ways.

The proposed solution comprises following steps:
- Modification of the original version of a company logo for each document, following different distribution ways This is performed according to some defined rules that relate a source ID with a possible specific modification of the logo. In order to make this step more secure, a secret key can be used
- Insertion of the modified logo in the document, whose distribution has to be monitored.
- If the illegal distributed document is in a printed form, it has to be scanned prior to the detection process.
- Detection of the logo modifications in a document and recovery of the source ID related to this modification.

It consists of a stand-alone software program able to modify the logo and to detect the modifications. Related information, such as secret keys, original logos, source IDs, can be stored in a database or simply in files. A scanner is necessary if also printed documents have to be monitored.

The most important advantage of this proposed solution is the possibility to track simultaneously the leakage of the printed and digital versions of documents. Furthermore, the solution is simple and adaptable to each company distribution workflow and to other existing security frameworks. Its low budget approach does not involve high investments by the company that wants to monitor the distribution of its documents, requiring low maintenance costs and time.

### References

- [1]: http://glossary.ippaper.com (Learn About Printing)
- [2]: http://www.4securitypaper.com/details1.html
- [3]: http://www.documentsecurity.com/technology/technology.aspx
- [4]: http://eng.koreac4.com/products/markprint
- [5]: http://www.trustcopy.com/ntc support faq.htm
- [6]: http://www.safetypaper.com/
- [7]: http://www.sharpusa.com/products/SharpSecurity1/
- [8]: http://www.lanier.com/page.php/document%20security
- [9]: http://www.adhaero.com/
- [10]: http://www.fujixerox.com.sg/index.php?option=content&task=view&id= 102&Itemid=170
- [11]: http://www.sealedmedia.com
- [12]: http://www.avocosecure.com/
- [13]: http://www.fasoo.com
- [14]: http://www.markany.com
- [15]: www.softcamp.co.kr
- [16]: Ingemar J. Cox; Matthew L. Miller; Jeffrey A. Bloom: Digital Watermarking. The Morgan Kaufmann Series in Multimedia Information and Systems; MORGAN KAUFMANN, 2002
- [17]: Dittmann, Jana Digitale Wasserzeichen: Grundlagen, Verfahren, Anwendungsgebiete. Series: Xpert.press, 2000,

## Claims

1. Computer-implemented method for tracking the distribution of company documents carrying a graphical information added to the documents e.g. a company logo or a confidential indication, comprising the steps of
- generating modifications of the original of the graphical information,
- associating each graphical information modification to a different one of a plurality of potential distribution channels for the company documents,
- inserting the modified graphical information in a document whose distribution has to be monitored, by rendering the graphical information in accordance with its respective modification upon generating the document by a source which is part of the respective distribution channel,
- comparing the graphical information of a distributed document or copy thereof with the modified versions of the graphical information for detecting the source of the distribution channel used for distributing the distributed document.

2. Computer-implemented method according to claim 1, wherein the step of comparing the graphical information of a distributed document or copy thereof with the modified version in case of a printed document comprises digitalizing the printed document.
